# EUROPEAN PATENT APPLICATION

(11) **EP 0 762 748 A2**
(43) Date of publication of application: **12.03.1997**
(21) Application number: 96113341.0
(22) Date of filing: 20.08.1996
(51) Int. Cl.: H04N 5/44

(54) **Low-memory line interpolation for a PAL-plus television receiver**

(30) Priority: 30.08.1995 JP 221483/95 U
(71) Applicant: SONY CORPORATION, Tokyo (JP)
(72) Inventor: Tatehira, Yasushi, c/o Sony Corp., Shinagawa-ku, Tokyo (JP); Kanou, Mamoru, c/o Sony Corp., Shinagawa-ku, Tokyo (JP); Kita, Hiroyuki, c/o Sony Corp., Shinagawa-ku, Tokyo (JP)
(74) Representative: TER MEER - MÜLLER - STEINMEISTER & PARTNER

(57) **Abstract**

A television broadcast receiving device for receiving a broadcast signal including a main picture part image signal transmitted in letterbox format and a resolution-enhancing signal for enhancing vertical resolution of the main picture part image signal transmitted using a scanning line composing a black band area, the television broadcast receiving device comprising an interleaver for processing the main picture part image signal and the resolution enhancing signal so as to be outputted in a prescribed order, a vertical filtering processor for smoothing continuity of the signal in the vertical direction lost at the interleaver and a delayer for alternately delaying a first field signal outputted from the interleaver and a second field signal outputted from the vertical filtering processor by a prescribed period, and being provided in such a manner that device cost is lowered as a result of using less memory.

## Description

### BACKGROUND OF THE INVENTION

### 1. Field of the Invention:

The present invention relates to a television broadcast receiving device, and more particularly to a television broadcast receiving device for reducing the number of memories used when scanning line interpolation processing is carried out using a resolution-enhancing signal.

### 2. Description Of Related Art:

In recent years, new media for wired and wireless systems have been introduced one after another as a result of remarkable developments in communications technology. In Europe a PAL plus broadcast method capable of obtaining wide aspect ratio high-resolution images while maintaining compatibility with the currently used PAL (Phase Alternation By Line) broadcast transmission methods is now attaining the stage of practical use via experimental broadcasts. PAL plus television receivers that decode signals using this PAL plus transmission method then extract the necessary information by performing scanning line interpolation processing so as to decode the broadcast signal.

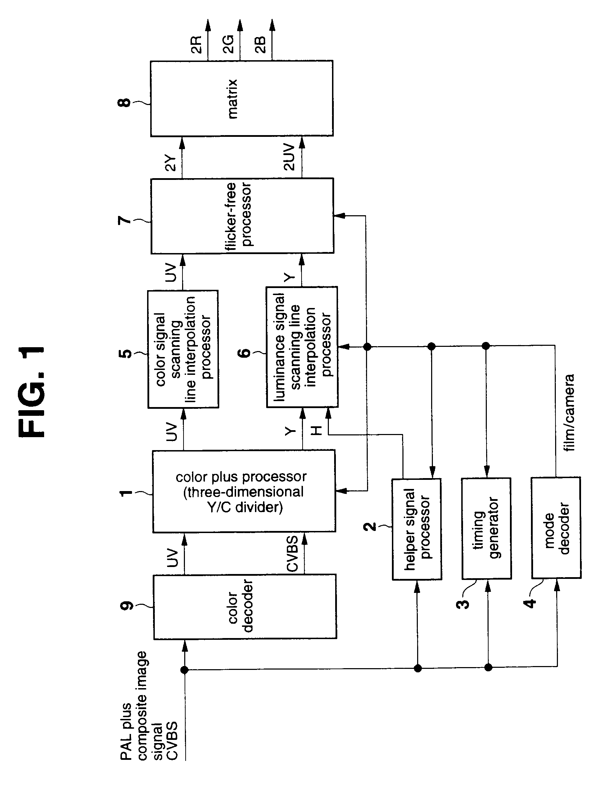

The outline of the PAL plus television receiver relating to the present invention will be described with reference to FIG. 1 to FIG. 8. First, the outline of a PAL plus decoder for a typical PAL plus television receiver are described with reference to FIG. 1.

The inputted PAL plus composite video signal (CVBS) is inputted to a color decoder 9, helper signal processor 2, timing generator 3 and mode decoder 4. The color decoder 9 extracts the band including the color carrier wave from the inputted PAL plus composite video signal and carries out color demodulation. A cross-color component is mixed with the color signal demodulated at this portion.

A color plus processor 1 extracts the luminance signal (Y) from the composite image signal sent from the transmission side after three-dimensional pre comb-filtering, using a three-dimensional filter employing field memory corresponding to the characteristics of the transmission side. The cross-color component is removed from the color difference signal obtained by the color decoder 9 of the previous stage using the same kind of filter.

The helper signal processor 2 carries out demodulation and amplitude regulation of the resolution enhancing signal modulated and transmitted by the color carrier signal at the upper and lower black bands of the PAL plus composite image signal. The resolution enhancing signal passing through this processing is referred to here as a helper signal. The timing signal generator 3 generates and outputs various timing signals necessary for the PAL plus television receiver. The mode decoder 4 decodes an identification control signal multiplexed in the vertical blanking portion (for example, the 23rd line) and transmits the necessary information to each part.

A color signal scanning line interpolation processor 5 carries out scanning line interpolation processing within fields for the input signal and the number of the scanning lines of main picture which has been 215 lines per field is converted by 4/3 times to 287 lines. A luminance signal scanning line interpolation processor 6 then combines the 215 main picture scanning lines per field with the luminance information in the 72 lines of helper signal transmitted in the black band area and converts this to a luminance signal comprised of 287 scanning lines.

Field-frequency transforming processing is carried out at a flicker-free processor 7 on the luminance signal (Y) and the color signal (UV) for an image with an aspect ratio of 16:9 comprising 287 scanning lines per field obtained at the color signal scanning line interpolation processor 5 and the luminance signal scanning line interpolation processor 6, and the field frequency thereof is converted to 100 fields per second. In this way, the large area flicker caused by the 50 Hz field frequency is removed.

In a matrix 8, the luminance signal at twice field-frequency (2Y) and the color signal (2UV) outputted from the flicker-free processor 7 are converted to an RGB signals (signals 2R, 2G and 2B) for being provided to, for example, a display device such as a CRT etc.

The portions essential for obtaining what is referred to as a PAL plus compatible TV receiver in a typical PAL plus television receiver are a helper signal processor 2, a luminance signal scanning line interpolation processor 6 and a color signal scanning line interpolation processor 5. These essential portions can therefore be considered central to the various configurations for PAL plus television receiver. Further, the same functions can be achieved for the SECAM method by changing the color decoder 9 and the color plus processor 1 to a SECAM method compatible color decoder and a Y/C separator.

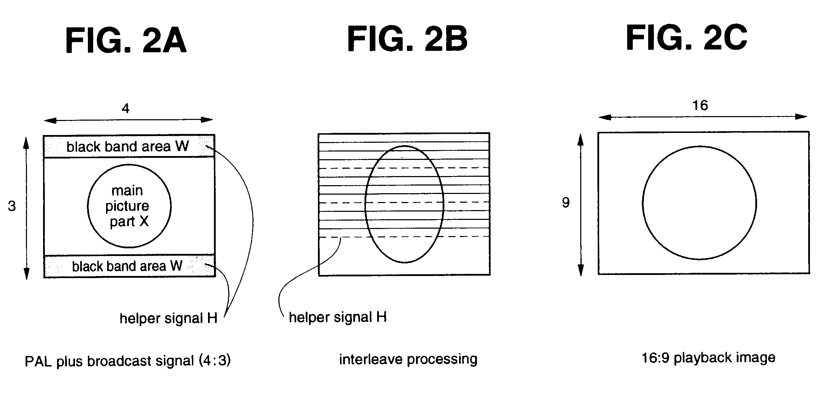

Next, the scanning line interpolation processing for the PAL plus television receiver is described with reference to FIG. 2A to FIG. 2C. FIG. 2A is a schematic view showing a PAL plus broadcast signal frame and FIG. 2B is a schematic view showing the 3:1 interleave processing. FIG. 2C is a view showing an example of an image display of aspect ratio 16:9.

The PAL plus broadcast signal is constructed from a main picture part X and black band areas W arranged above and below the main part X. A resolution enhancing signal as a helper signal (H) for enhancing vertical resolution is superimposed with the black band area W. Interleave processing using memory is then carried out at the PAL plus television receiver in order to decode the PAL plus broadcast signal of this kind of structure. Namely, after information corresponding to lines 1 to 3 of the main picture part X within the picture of aspect ratio 4:3 as shown in FIG. 2A have been outputted, information for one line of resolution enhancing signal as a helper signal (H) is inserted. Information corresponding to the following three lines of the main picture part X is then outputted and information corresponding to the next line of the helper signal (H) is inserted. In this way, an image is generated where the lines for the main picture area and helper signals for the black band area are interleaved as shown in FIG. 2B.

Further, the wide image of aspect ratio 16:9 shown in FIG. 2C can be reproduced by filtering this kind of interleave-processed image using a vertical filter with interpolation using the helper signal (H) being performed. By performing the aforementioned kind of processing, viewers having wide screen television receivers of aspect ratio 16:9 can obtain wide images played-back at an aspect ratio of 16:9 and users having television receivers of aspect ratio 4:3 can obtain the kind of conventional images played back at an aspect ratio of 4:3 shown in FIG. 2A.

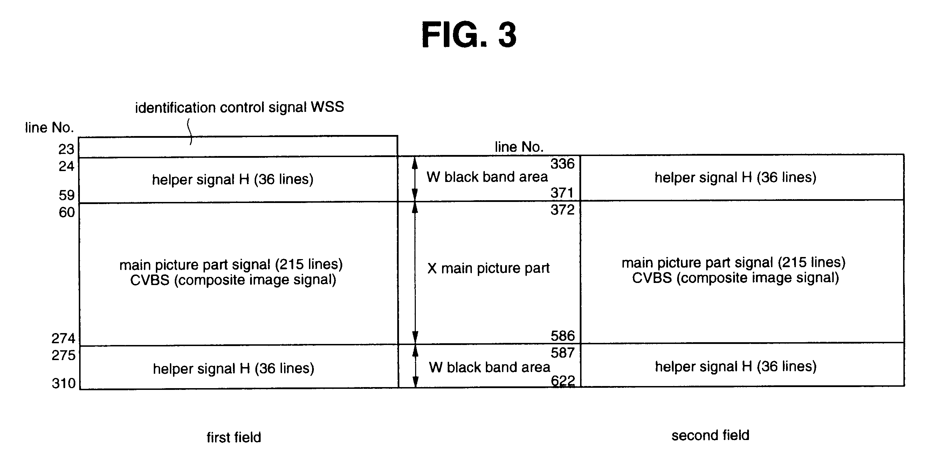

Next, the details of the PAL plus broadcast signal frame structure are described with reference to FIG. 3. In FIG. 3, the first field of the PAL plus broadcast signal comprises a main picture part X made up of 215 lines and black band areas H above and below the main picture part X each comprising 36 lines. Further, an identification control signal WSS for detecting the presence or absence of a PAL plus broadcast signal i.e. a mode signal and three-dimensional pre comb-filtering etc. is inserted at the 23rd line.

At the main picture part X of the PAL plus broadcast signal, a composite video signal played-back for an image of aspect ratio 16:9 comprised of 215 scanning lines per one field is transmitted and, at the 36 line black band areas H at the top and bottom of the main picture part X, a helper signal is transmitted as an resolution enhancing signal for enhancing the vertical resolution of the luminance signal for the main picture part X. The second field is constructed in the same way. An image of aspect ratio 16:9 comprising 287 lines per one field is obtained at the PAL plus television receiver from a signal of 287 lines, which is the total of the luminance signal (215 lines/field) for the main picture part X and the helper signal (H) (top and bottom, 72 lines per field). Further, an image of aspect ratio 16:9 comprising 287 scanning lines per field is obtained from the color signal (215 lines/field) for the main picture part in a similar manner.

This kind of interpolation processing is carried out in frame units. However, picture quality deteriorates dramatically when processing is carried out in frame units in the case of moving images where the images for the first field (hereinafter referred to as the "A-field") and the second field (hereinafter referred to as the "B-field") are substantially different within one frame. Because of this, in the PAL plus method, a mode signal (for example, 1 bit) indicating the correlation between two fields is superimposed within the identification control signal WSS and reliable processing is possible. The modes indicated by the mode signal are referred to as "Film Mode" and "Camera Mode". In film mode, interpolation is carried out within a frame using images of the A-field and B-field within the same frame. This mode corresponds to an image of a telecine for which the original image is provided at 24 frames/sec. On the other hand, in camera mode, interpolation within one field is carried out using one field scanning line.

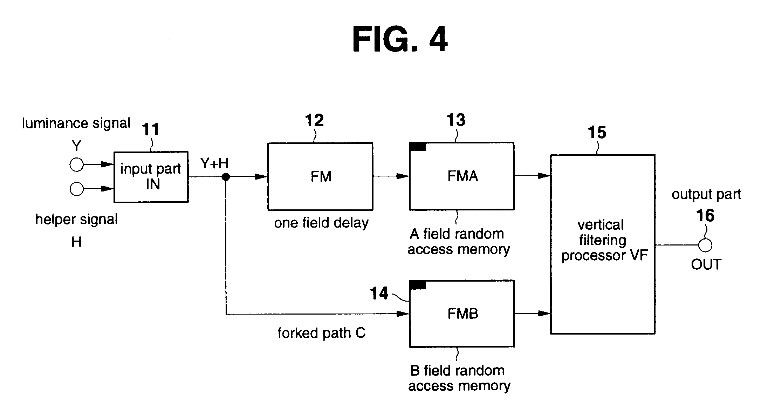

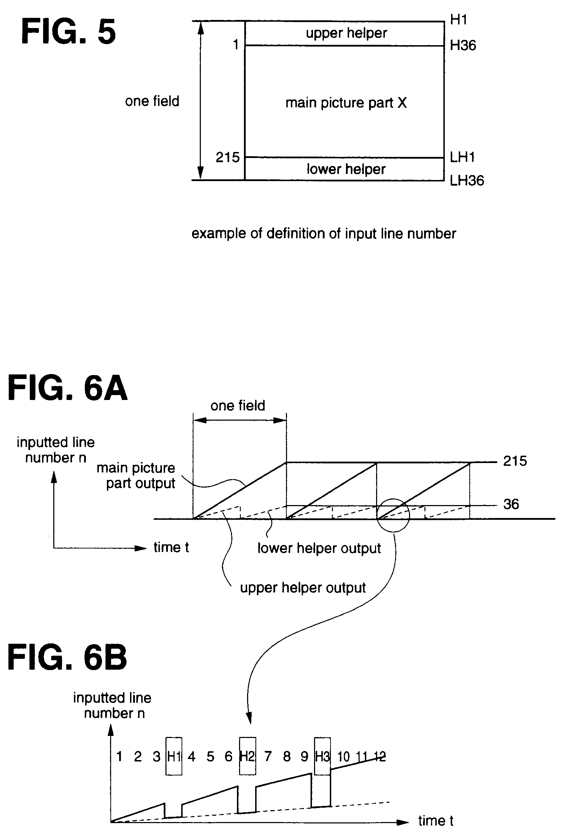

Next, the outline of scanning line interpolation processor in a PAL plus television receiver is described with reference to FIG. 4 to FIG. 6B. FIG. 4 shows an example of the configuration of the luminance signal scanning line interpolation processor 6 in the PAL plus television receiver shown in FIG. 1. FIG. 5 shows the definition of the line numbers in the schematic view showing the memory operation in FIG. 6A and FIG. 6B. When memory control is shown schematically in the following and in other drawings the line numbers are given on the basis of these definitions, i.e. the main picture part X is shown to be lines 1 to 215, the upper black band area is H1 to H36 and the lower black band area is LH1 to LH36.

FIG. 6A and FIG. 6B are schematic views showing the states of the interleave processing. The solid line of FIG. 6A shows a schematic view of the main picture part in an interleave-processed state and the dashed lines show the interleave-processed state of the helper signal. FIG. 6B is an expanded view of the rising portion (portion enclosed by a circle) of the outputted main picture part of FIG. 6A. The vertical axes of FIG. 6A and FIG. 6B show the line numbers defined in FIG. 5 and the horizontal axes show the time t.

The luminance signal scanning line interpolation processor 6 in FIG. 1 for the PAL plus broadcast signal comprises an input part 11, vertical filtering processor 15 and output part 16, together with a one field delay field memory (FM) 12, an A-field random access memory (FMA) 13 and a B-field random access memory (FMB) 14 of a generally three field portion field memory as shown in FIG. 4. The reason for using two memories for FMA 13 and FMA 14 is that two modes of the aforementioned film mode and camera mode are provided for the PAL plus broadcast signal, with each of the modes being for carrying out the following operation. The details of this operation are as described below.

In FIG. 4, a luminance signal (Y) and a helper signal (H) are inputted to the input part 11. At the input part 11, the helper signal (H) is superimposed with the black band area of the luminance signal (Y). The superimposed signal is then A/D converted and taken as a digital luminance signal (Y + H). In the film mode mainly for handling still images and movie image sources, this luminance signal (Y + H) (for example, an 8-bit digital signal) is inputted to the one field delay field memory FM 12 for carrying out interpolation between frames. At the FM 12, the image signal delayed by one field period is inputted to the A-field memory FMA 13. On the other hand, the luminance signal (Y + H) from the input part 11 is directly inputted to FMB 14 at the same time.

As described above, the interleave processing shown in FIG. 6A and FIG. 6B is carried out at FMA 13 and FMB 14. In FIG. 6A and 6B, the image signal for the main picture part is outputted from the field memory as shown by the solid lines, while the helper signal is outputted with the interleave processing being performed thereon as shown by the broken lines. FIG. 6B shows the details of the circled portion in FIG. 6A. In this way, information corresponding to the line H1 of the helper signal is outputted after information corresponding to the lines 1, 2 and 3 of the main part X. Information corresponding to the next three lines of the main picture part X is then outputted and information corresponding to the line H2 of the helper signal is outputted. Hereafter, the main picture part X and the helper signal are outputted in the same way.

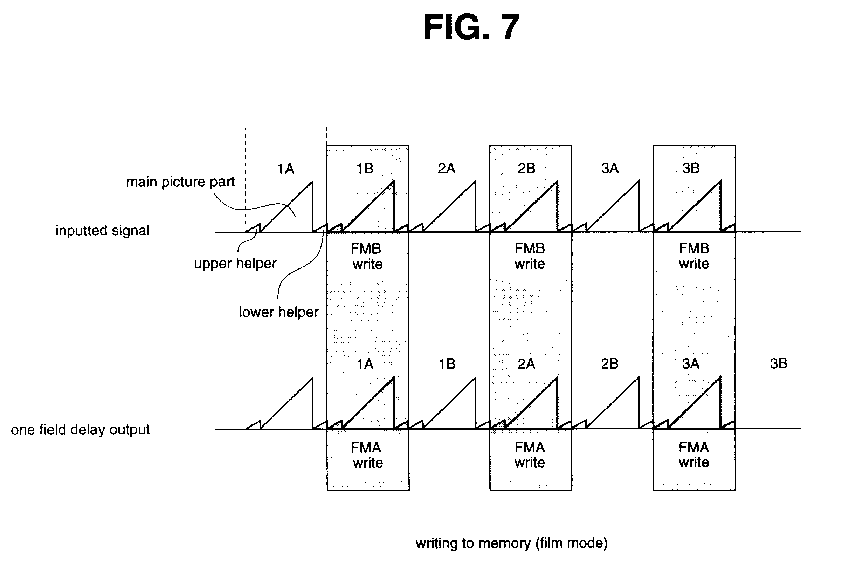

Next, the operation of reading and writing data to and from FMA 13 and FMB 14 is described using the schematic view of FIG. 7. In film mode, writing of data to FMA 13 and FMB 14 is only carried out when the respective signals of the A-field and B-field within the same frame arrive at the same time, as shown in FIG. 7.

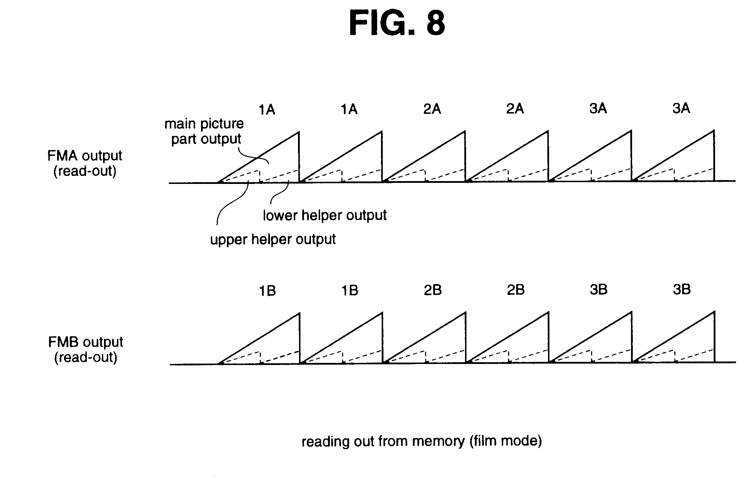

The image signals for both A- and B-fields stored at FMA 13 and FMB 14 are interleaved by FMA 13 and FMB 14 in the way shown in FIG. 8. Further, the same contents are read-out for two consecutive fields by FMA 13 and FMB 14. Namely, the signal of A-field (1A) for the first frame is read-out two times in succession from FMA 13 and the signal of A-field (2A) for the second frame is read-out two times in succession. The signals of A-fields for from the third frame onwards are then read-out two times in succession in the same way. Similarly, the signals of B-field (1B) for the first frame is read-out two times in succession from FMB 14 and the signals of B-field (2B) for the second frame is also read-out two times in succession. The signals of B-fields for from the third frame onwards are then read-out two times in succession in the same way.

The reason for reading the same contents out across two fields, in the case of film mode, is because the contents of the scanning lines of both the A-field and the B-field inputted from the input part 11 are necessary in calculations for both the A-field output and the B-field output. At the vertical filtering processor (VF) 15, the necessary image information is generated and outputted to the output part 16 by performing vertical filtering processing on the image information for the two fields.

In camera mode, the image signal inputted at the input part 11 is further inputted to the FMB 14 via the forked path C shown in FIG. 4 and interleave processing is performed. This image information is then inputted to the vertical filtering processor 15 of the next stage. At the vertical filtering processor 15, the necessary image information is generated and outputted to the output part 16 by carrying out vertical filtering processing of the image information for one field. Here the case of processing the luminance signal is described but scanning line interpolation can also be carried out for the case of a color signal with almost the same process (although interleave processing using the helper signal is not carried out).

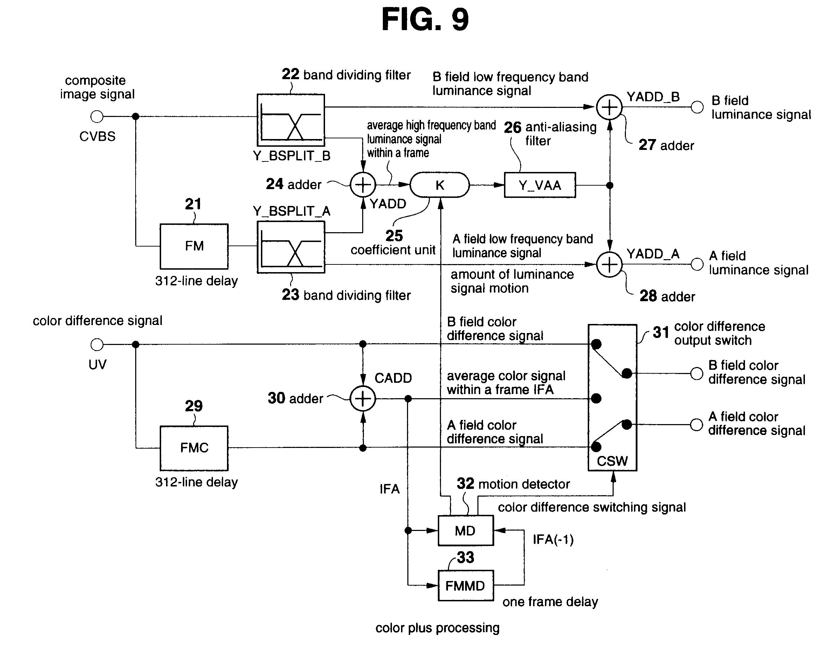

Color plus processing will now be described with reference to FIG. 9 to FIG. 11. FIG. 9 is a block diagram showing the configuration of the color plus processor 1 in the PAL plus television receiver of FIG. 1. The composite image signal (CVBS) (for example, 8 bits signal) is inputted to a band-splitting filter (Y_BSPLT_B) 22 and a field memory (FM) 21 at the same time. At the band splitting filter 22, the composite image signal CVBS is divided into a low frequency component not including the color carrier signal and a high-frequency component including the color carrier signal. The boundary of these bands is at approximately 3 MHz in the case of a PAL method composite image signal.

On the other hand, the composite image signal inputted to the field memory 21 is delayed by a period for scanning 312 lines of the image signal and then inputted to the band-splitting filter (Y_BSPLT_A) 23. The band-splitting filter 23 has the same characteristics as the band-splitting filter 22. The high-frequency components of the composite image signals passing through the band-splitting filters 22 and 23 are added by the adder (YADD) 24. In a PAL image signal, the luminance signals spaced from each other by 312 lines within the same frame have a high correlation, and the color carrier signals included therein differ by 180 degrees in phase. The color carrier signal included in the high frequency region of the composite image signal is therefore negated by adding, and average high frequency band luminance signal within a frame can be obtained. This is three-dimensional Y/C dividing technique utilizing the aforementioned characteristics of the PAL image signal.

With pictures having dramatic movement, the above characteristics of the PAL image signal is no longer maintained and interference component leaks into the average high frequency luminance component within a frame obtained by this addition. In order to reduce the visibility of the interference component, the average high frequency luminance component within a frame is then attenuated by multiplying the component with a coefficient using a coefficient unit (K) 25. The method of calculating the amount of movement is described later. The average high luminance component within a frame regulated to have an amplitude corresponding to the amount of movement is inputted to the anti-aliasing filter (Y_VAA) 26. Irregularities in the continuity of inclined lines are then reduced by inter-field addition using the adder 24.

The high frequency band luminance component that passes through the anti-aliasing filter is added with the B-field low frequency band luminance signal at an adder 27, and is also added with the A-field low frequency band luminance signal that passes through the band splitting filter 23 at an adder 28 before being outputted as the B-field luminance signal (YADD_B) and the A-field luminance signal (YADD_A).

With regards to the color difference signal (UV), the A-field color difference signal inputted to the 329 line delay field memory (FMC) 29 is outputted from the FMC 29 in synchronizm with the subsequently inputted B-field color difference signal. The A-field color difference signal and the B-field color difference signal are inputted to an adder (CADD) 30 and added to be taken as the average color difference signal (IFA) within a frame. The luminance component mixed with the color difference signal can then be removed on the basis of the same principle as for the operation for removing the carrier color signal from the aforementioned high-band luminance component. However, when this processing is carried out for images having dramatic movement, a distortion component is generated. The average color difference signal (IFA) within a frame the A-field color difference and B-field color difference signals are then switched over at a color difference output switch (CSW) 31 in response to the amount of movement to obtain suitable A-field color difference signal output and B-field color difference signal output. In other words, IFA is selected when the image has less movement and the A-field and B-field color difference signals are selected when the image has a lot of motion.

Next, a simple description is given of the method of measuring the amount of movement. The average color difference signal (IFA) within one frame is inputted to a motion detector (MD) 32 and a one frame delay (motion detector memory: FMMD) 33. The motion detector 32 generates the attenuation coefficient K for the average high frequency band luminance signal within one frame and the color difference switching signal on the basis of an algorithm defined in the PAL plus specification using the average color difference signal (IFA) within one frame and the average color difference signal within one frame delayed by one frame (IFA(-1)).

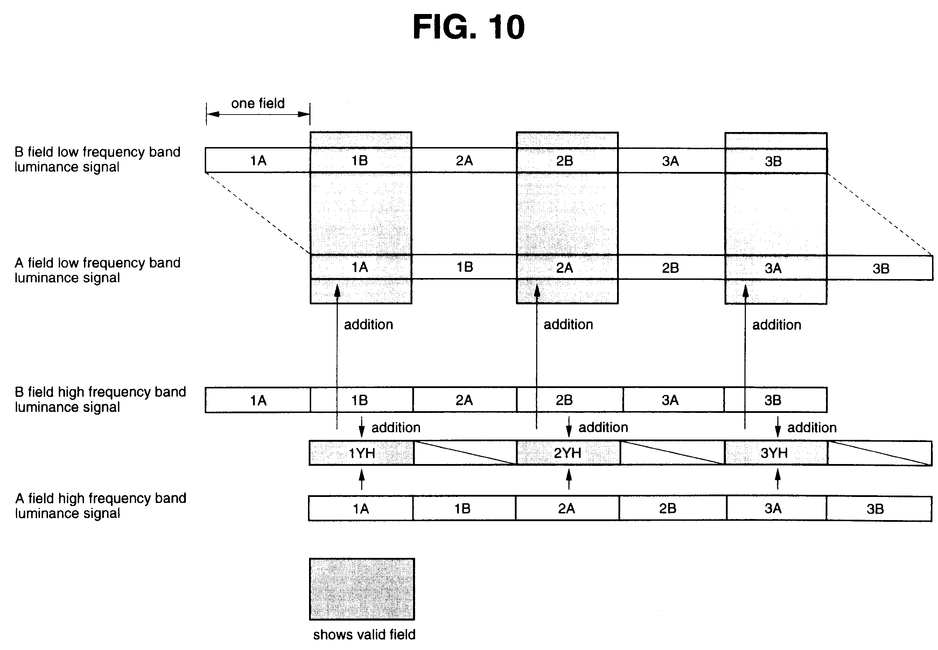

This process is described in time sequence with reference to FIG. 10. As shown in FIG. 10, it is assumed that the fields of the image arrive in the order of 1A, 1B, 2A and 2B for the B-field low frequency band luminance signal. Further, the A-field low frequency band luminance signal is the signal that passes through the field memory 21 in FIG. 9 so that the B-field low frequency band luminance signal is delayed by one field. Similarly, the high frequency band luminance signal is also shown in the drawings in this form. The average high frequency band luminance signal within a frame is also the sum of the high frequency band luminance signals for two fields within the same frame. A correct result can therefore be obtained only for fields where the A-field and the B-field of the same frame arrive at the same time. Considering this point, an average high frequency band luminance signal within a frame can be made so that it is obtained every other field (1YH, 2YH and 3YH shown by the cross-hatching in FIG. 10).

On the other hand, the A-field low frequency band luminance signal (1A) and the B-field low frequency band luminance signal (1B) in the same field can be obtained also for fields, for example, 1YH in FIG. 10, for which a valid average high frequency band luminance signal within one frame can be obtained. The average high frequency band luminance signal within one frame and the low frequency band luminance signal are then added, with a valid luminance signal then being obtained every other field as a result. For the case of the color difference signal, basically the same processing as for the case of the aforementioned luminance signal can also be performed and an explanation of this case will therefore be omitted.

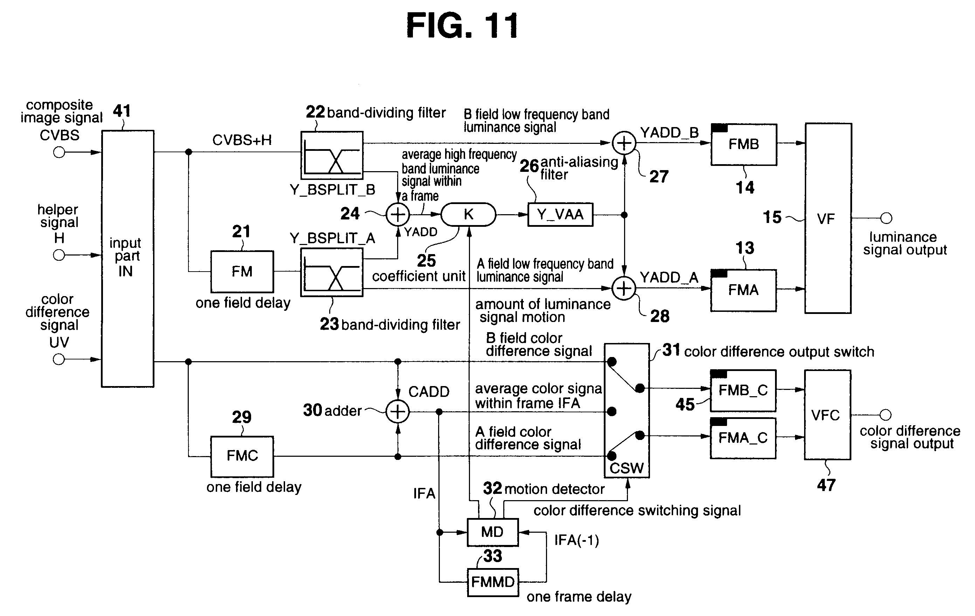

As becomes clear from FIG. 10, the processed results for the color plus processor 1 are obtained as two output lines every other field. When these results are compared with the view in FIG. 7 showing control of writing of data to memory in the film mode, it can be seen that the field memory 12 shown in FIG. 4 can be replaced with the color plus processor. Fig. 11 shows a block diagram showing the color plus scanning line interpolation processor circuit for which the field memory 12 of the scanning line interpolation processor shown in FIG. 4 is replaced with the color plus processor shown in FIG. 9. In FIG. 11, the frame memory (FMA_C) 46 and the frame memory (FMB_C) 45 are memories for interleave processing the color difference signals. Further, a color signal vertical filtering processor 47 is for carrying out scanning line interpolation processing with respect to the color signal. Circuits of this configuration are used in many actual PAL plus decoders.

However, in the above image signal processing device, the scanning line interpolation processor requires memories for three fields as shown, for example, in FIG. 4. Integration of the device therefore becomes difficult and the cost of the devices becomes high because a large amount of memory is used.

As the present invention sets out to resolve the above problems, the object of the present invention is to lower device cost by cutting-down on memory capacity.

### SUMMARY OF THE INVENTION

In order to achieve the aforementioned object, according to the present invention, a television broadcast receiving device for receiving a broadcast signal including a main picture part image signal transmitted in letterbox format and a resolution-enhancing signal for enhancing vertical resolution of the main picture part image signal transmitted using a scanning line composing a black band area, the television broadcast receiving device comprises an interleaver for processing the main picture part image signal and the resolution enhancing signal outputted in a prescribed order, a vertical filtering processor for smoothing continuity of the signal in the vertical direction lost at the interleaver and a delayer for alternately delaying a first field signal outputted from the interleaver and a second field signal outputted from the vertical filtering processor by a prescribed period.

The interleaver outputs one scanning line of enhancement signal for the black band area following a plurality of scanning lines of image signal for the main picture part.

The present invention may further comprise a signal switcher for providing the first field signal outputted from the interleaver to the delayer and outputting the second field signal delayed by the delayer to an output part in a first period, and providing the first field signal outputted from the delayer and the second signal outputted from the interleaver to the vertical filtering processor and providing the second field signal outputted from the vertical filtering processor to the delayer in a second period.

The interleaver comprises a memory capable of random access and the delayer delays an inputted signal by one field period.

According to the television broadcast receiving device of the present invention, the interleaver takes a composite image signal, the resolution enhancing signal and a color difference signal as input, outputs one scanning line of resolution-enhancing signal following a plurality of scanning lines of the composite image signal, and outputs one scanning line of dummy data following a plurality of scanning lines of the color difference signal.

The television broadcast receiving device according to the present invention may also further comprise a color plus processor for carrying out color plus processing using the output of the interleaver and the output of the delayer, wherein the color plus processor provides the output thereof to the vertical filtering processor.

The vertical filtering processor of the television broadcast receiving device according to the present invention can comprise a first vertical filtering processor taking a luminance signal outputted from the color plus processor as input and a second vertical filtering processor taking a color difference signal outputted from the color plus processor as input.

The television broadcast receiving device according of the present invention can further comprise a data compression encoder provided at the input side of the delayer and a data compression decoder provided at the output side of the delayer.

Further, at least the color plus processor and the vertical filtering processor of the television broadcast receiving device of the present invention can be comprised of a digital signal processors.

### BRIEF DESCRIPTION OF THE DRAWINGS

FIG. 1 is a block diagram showing the essential parts of a PAL plus television receiver;
FIG. 2A to FIG. 2C are views illustrating the structure of the PAL plus broadcasting signal and the interleave processing method;
FIG. 3 is a view showing the frame structure of the PAL plus broadcast signal;
FIG. 4 is a view showing an outline of the scanning line interpolation processor for the PAL plus television receiver;
FIG. 5 is a view showing the definition of the line numbers occurring in the schematic view showing the memory operation;
FIG. 6A and FIG. 6B are views schematically showing the interleave-processing;
FIG. 7 is a view illustrating the timing of writing to memory in film mode;
FIG. 8 is a view illustrating the timing of reading out from memory in film mode;
FIG. 9 is a block diagram showing an example of the configuration of the color plus processor in the PAL plus television receiver;
FIG. 10 is a view schematically illustrating the memory control occurring at the color plus process;
FIG. 11 is a block diagram showing an example of the configuration for the processing system in which the color plus processor and the scanning line interpolation processor are combined;
FIG. 12 is a block diagram showing the configuration of an embodiment of a PAL plus decoder to which the image signal processing device of the present invention is applied;
FIG. 13 is a block diagram showing the configuration of the scanning line interpolation processor of the embodiment shown in FIG. 12;
FIG. 14A to FIG. 14F are schematic illustrations of relations between time and line numbers of signals in various parts of the embodiment of the scanning line interpolation processor shown in FIG. 13;
FIG. 15 is a block diagram showing configurations of a color plus processor and a scanning line interpolation processor in the second embodiment of the present invention;
FIG. 16A to FIG. 16F are schematic illustrations of relations between time and line numbers of signals in various parts of the embodiment shown in FIG. 15;
FIG. 17A to FIG. 17C are block diagrams showing other embodiments of scanning line interpolation processors of the present invention; and
FIG. 18 is a block diagram showing an example of the configuration of the PAL plus television receiver to which the image signal processing device of the present invention is applied.

### DETAILED DESCRIPTION OF THE PREFERRED EMBODIMENTS

### First Embodiment

The present invention can be well applied to image signal processing devices in general. However, a description is given here mainly taking a PAL plus television receiver already in the stage of practical use as an example of an image signal processing device. An outline of a PAL plus television receiver appears in "EDTV and ATV, Trends in the U.S. and European Countries", in the Journal of the Institute of Television Engineers of Japan, Vol. 46, No. 3, P. 296 to 283 (1992).

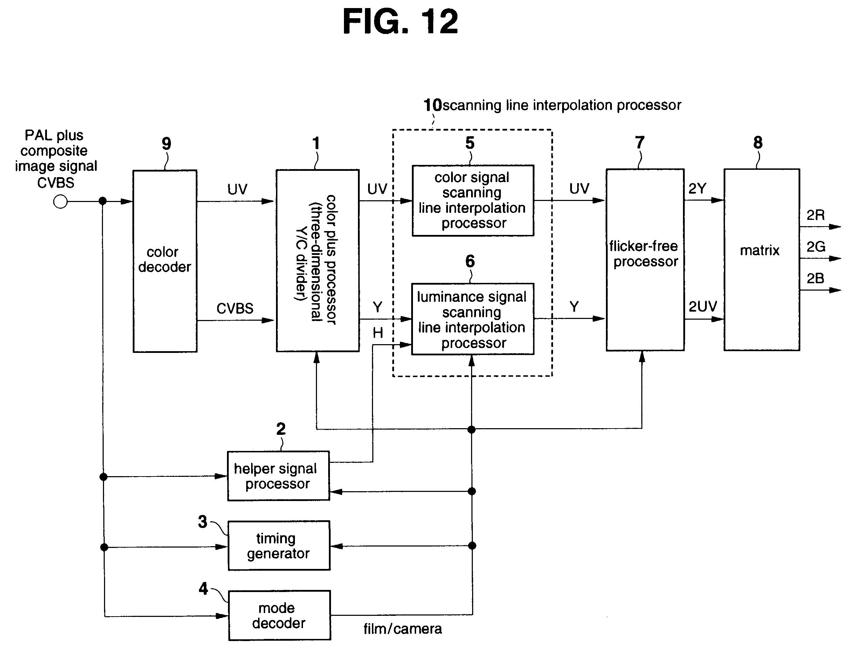

An embodiment of the present invention applied to a television broadcast receiving device will now be described with reference to FIG. 12 to FIG. 18. Portions that are the same as those in the diagrams showing the aforementioned PAL plus television receiver are given the same numerals and descriptions of the configuration and operation thereof portions are omitted.

FIG. 12 is a block diagram showing an embodiment of a configuration of a PAL plus decoder. A color decoder 9 extracts the band including the color carrier wave from the PAL plus composite image signal using a simple bandpass filter and carries out color demodulation. A cross-color component is mixed with this signal. The color plus processor 1 extracts the luminance signal from the composite image signal, which undergoes three-dimensional pre comb-filtering on the transmission side before being transmitted, using a three-dimensional filter having a field memory corresponding to the characteristics of the transmission side. The cross-color component is removed from the color signal from the color decoder 9 using a similar filter.

The helper signal processor 2 (extracting means) carries out demodulation and amplitude regulation of the resolution enhancement signal (helper signal) modulated and transmitted by the color carrier signal at the upper and lower black band areas of the inputted composite image signal. The timing generator 3 generates and outputs various timing signals. The mode decoder 4 decodes the identification control signal multiplexed in the vertical blanking portion (for example, line 23) of the composite image signal, identifies the film mode and camera mode etc. and outputs signals in accordance with the identification results. The color signal scanning line interpolation processor 5 converts the numbers of the scanning lines of main picture which has been 215 lines per field by 4/3 times to 287 lines by performing scanning line interpolation processing within fields. The luminance signal scanning line interpolation processor 6 converts the main picture of 215 scanning lines per field to give a 287 lines luminance signal by combining the helper signal (a 72 lines luminance information) superimposed in the black band areas.

The flicker-free processor 7 performs field-frequency transforming processing on the luminance signal (Y) and the color signal (UV) for an image with an aspect ratio of 16:9 comprising 287 scanning lines per field obtained by the color signal scanning line interpolation processor 5 and the luminance signal scanning line interpolation processor 6, and the field frequency thereof is converted to a 100 fields per second. This removes large area flicker caused by a 50Hz field frequency. A matrix (MATRIX) 8 then converts the luminance signal at twice field-frequency (2Y, 2UV) provided by the flicker-free processor 7 to an RGB signal at twice frequency (2R, 2G, 2B) to be provided to a CRT 125 (display means).

The above is a configuration for a typical PAL plus television receiver. However, the portions essential for obtaining what is referred to as a PAL plus compatible television receiver are the helper signal processor 2, the color signal scanning line interpolation processor 5 and the luminance signal scanning line interpolation processor 6. These essential portions can therefore be considered to be central to the various configurations for PAL plus television receivers. The present invention covers all configurations of television receiver including these essential portions. In particular, the present invention relates to a method of reducing the amount of memory used in the luminance signal scanning line interpolation processor 6, color signal scanning line interpolation processor 5 and the color plus processor 1. A detailed example of this method is given in the following.

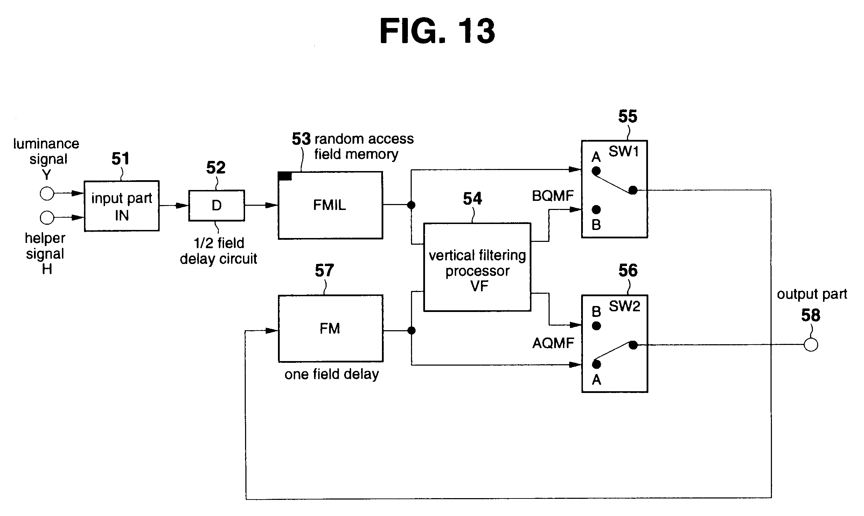

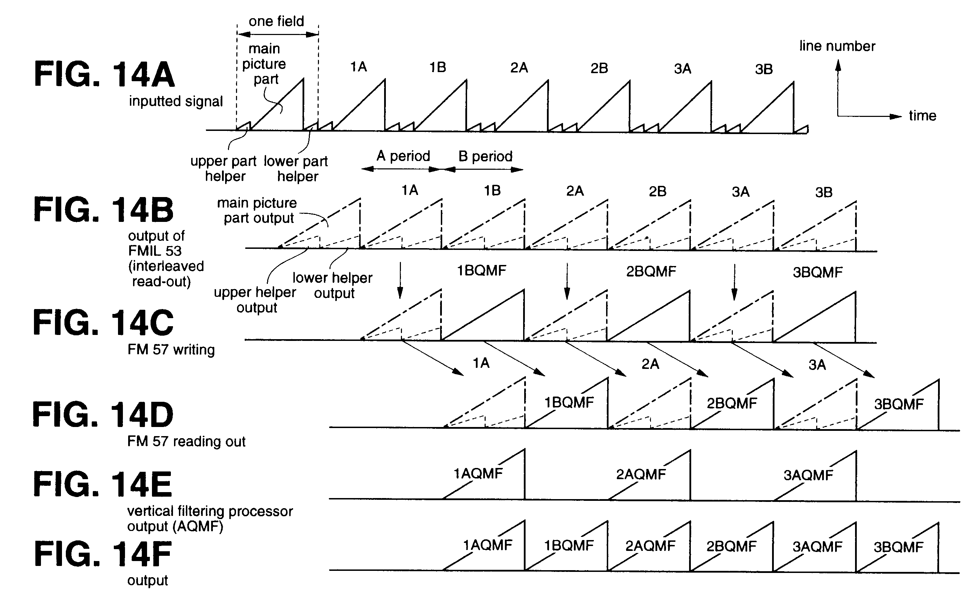

A description will now be given with reference to FIG. 13 and FIGs. 14A to 14F of an embodiment of the image signal processing device of the present invention applied to a PAL plus television receiver. FIG. 13 is a block diagram showing an example of the configuration of the scanning line interpolation processor circuit for carrying out luminance signal processing presented as an essential part of the PAL television receiver. FIG. 14A to FIG. 14F show the relationship between time and the line numbers of signals at various part of the circuit shown in FIG. 13. In FIG. 14A to FIG. 14F, the vertical axis shows the line number and the horizontal axis shows time.

In FIG. 13, the essential parts of the PAL plus television receiver comprises an input part 51 inputted with the main picture part signal (luminance signal) and the helper signal, a 1/2-field delay circuit (D: Delay) 52 (delay regulating means) for providing a delay equivalent to a period for scanning approximately half a field, a random access field memory (FMIL) 53 (storage means) capable of storing and randomly reading-out signals corresponding to inputted prescribed fields, a changeover switch (SW) 5 (first switching means) and a changeover switch 56 (second switching means) for being switched over to any one of the inputted signals so that it is outputted, a vertical filtering processor (VF) 54 (scanning line interpolation means) for performing vertical filtering processing, a one field delay field memory (FM) 57 (delay means), and an output part 58.

The following is a description of the operation of the receiver in film mode. In FIG. 13, the luminance signal (Y) and the helper signal (H) are inputted to the input part 51. In this embodiment, it is taken that these inputted signals have been color plus processed at the stage previous to the input part 51. At the input part 51, the helper signal (H) is superimposed with the black band areas of the luminance signal (Y) to become the new luminance signal (Y + H) and A/D converted. This luminance signal (Y + H) (for example, an eight-bit digital signal) is inputted to the 1/2 field delay circuit 52 and is delay-processed. Namely, the total signal delay due to processing at various parts shown in FIG. 13 is adjusted to be a period for scanning one field so that image quality deterioration caused by irregularity in the synchronization signal due to the VTR (Video Tape Recorder) signals etc. is avoided.

The 1/2 field delay circuit 52 is not necessary when the scanning line interpolation processor has a part for performing flicker-free processing in the following stage or when connection to a VTR is not assumed. Signals passed through the 1/2 field delay circuit 52 are inputted to the random access field memory 53. At the random access field memory 53, a helper signal is read out at a rate of one line for three lines of the main picture part and a so-called interleave-processed image is outputted.

During the period of outputting the A-field signal from the random access memory 53 (hereinafter referred to as the A period), the two changeover switches 55 and 56 are both switched over to the terminals A and the output of the FMIL 53 is inputted to the one field delay field memory 57 via the changeover switch 55. At the same time, the output of FMIL 53 is inputted to the vertical filtering processor 54. At the vertical filtering processor 54, the A-field filter output (AQMF) and the B-field filter output (BQMF) are calculated out using the inputs from FMIL 53 and FM 57 and outputted.

However, the output from the vertical filtering processor 54 is only taken to be valid at the period (hereinafter referred to as the B period) when the B-field signal is being outputted from FMIL 53. This is for the following reason. The A-field image signal inputted to FM 57 at the A period is delayed by a period for scanning one field and reaches VF 54 in the B period. On the other hand, the B-field image signal is outputted from FMIL 53 in the B period. The A-field image signal from FM 57 and the B-field image signal from FMIL 53, both of which belong to the same frame, reach VF 54 at the same time and are therefore input signals suited for the aforementioned film mode processing. At VF 54 which obtained this input, the signal AQFM taken as the interpolation results for the A-field signal and the signal BQFM taken as the interpolation results for the B-field signal are calculated at the same time and outputted.

In the B period where the valid signals AQMF and BQMF are obtained from the vertical filtering processor 54, the changeover switch 56 is switched over to the terminal B and the signal AQMF, taken as the interpolation results for the A-field signal delayed by a period for scanning one field and outputted from VF 54, is outputted from the output part 58. On the other hand, the signal BQMF as the result of interpolation for the B-field signal outputted from VF 54 is provided to FM 57 via the changeover switch 55 selecting the terminal B in the B period and is delayed by a period for scanning one field. In the following A period, the delayed signal BQMF is outputted from the output part 58 via the changeover switch 56 which has been switched over to the terminal A. In this A period, the signal BQMF is inputted to the vertical filtering processor 54 together with the A-field signal outputted from FMIL 53. However, as described above, the output from the vertical filtering processor 54 is only valid in the B period and vertical filtering processing is therefore not carried out. As a result of the above, the signal AQMF and the signal BQMF are alternately outputted from the output part 58 and a scanning line interpolation output is obtained.

Next, the process in film mode is described with reference to FIG. 14A to FIG. 14F. FIG. 14A is the input signal to FMIL 53 and comprises the upper helper, the lower helper and the main picture part. FIG. 14B shows the signal outputted from the FMIL 53 as having been interleave processed with each scanning line being read-out in a prescribed order and shown in the same way as in FIG. 6A and FIG. 6B. FIG. 14C shows the input signal for FM 57. As described above, in the A period, the output of FMIL 53 is written directly to FM 57 and, in the B period, the output signal BQFM from the vertical filtering processor 54 is selected and written to FM 57 via the changeover switch 56.

FIG. 14D shows the signal read out from FM 57 and is the signal shown in FIG. 14C delayed by a period for scanning exactly one field. FIG. 14E shows the signal AQMF outputted from VF 54 only in the valid B period. The output signal shown in FIG. 14F is then obtained by alternately switching over the signals shown in FIG. 14D and FIG. 14E using the changeover switch 56.

Next, a description is given of the operation in camera mode. In camera mode, the same kind of switching operation as in film mode is also performed in the changeover switches 55 and 56. Namely, the changeover switches 55 and 56 both select the side A in the A period where the A-field signal is outputted from the random access field memory 53. Further, the changeover switches 55 and 56 both select the side B in the B period where the B-field signal is outputted from the random access field memory 53. The luminance signal (Y + H) inputted from the input part 51 is then inputted to the random access field memory via the 1/2 field delay circuit 52. In the A period, the A-field luminance signal interleave-processed at the random access field memory 53 is provided to the one field delay field memory 57 via the changeover switch 55 selecting the terminal A. In the following B period, the A-field luminance signal (already interleaved) delayed at the one field delay field memory 57 is provided to the vertical filtering processor 54 together with the B-field luminance signal interleaved at the FMIL 53. At the vertical filtering processor 54, calculations are performed using coefficients different to the coefficients used during film mode. In the case of the aforementioned film mode, the luminance signals for the A-field and B-field (interleaved) of the same frame were combined and vertical filtering calculations thereof were performed. However, in the case of camera mode, although the luminance signals for the A-field and B-field (interleaved) are inputted at the same time, calculations have to be carried out every field and the A-field luminance signal and the B-field luminance signal are therefore separately calculated at the same time. The vertical filtering-processed A-field luminance signal (AQMF) is then outputted at the output part 58 via the changeover switch 56 selecting the terminal B. Further, the (interleaved) B-field luminance signal calculated separately from the A-field luminance signal at the vertical filtering processor 54 is provided to the FM 57 via the changeover switch 55 also selecting the terminal B. The process as far as the above is carried out in the B period. In the following A period, the (interleaved) B-field luminance signal delayed at the FM 57 is outputted to the output part 58 via the changeover switch 56 selecting the terminal A. Interleaved and vertical filtering-processed A-field and B-field luminance signals are then alternately outputted to the output part 58 by repeating this series of processes.

### Second Embodiment

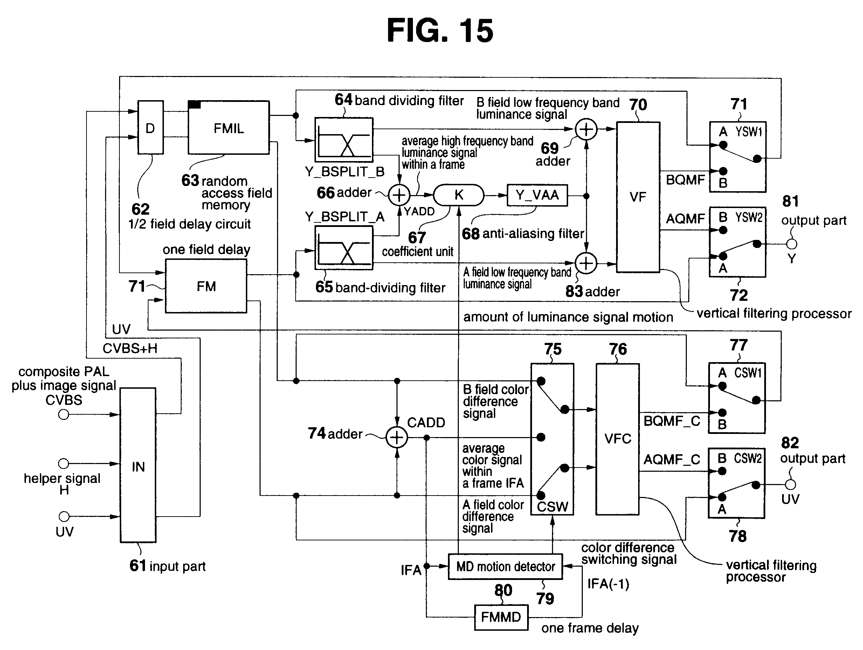

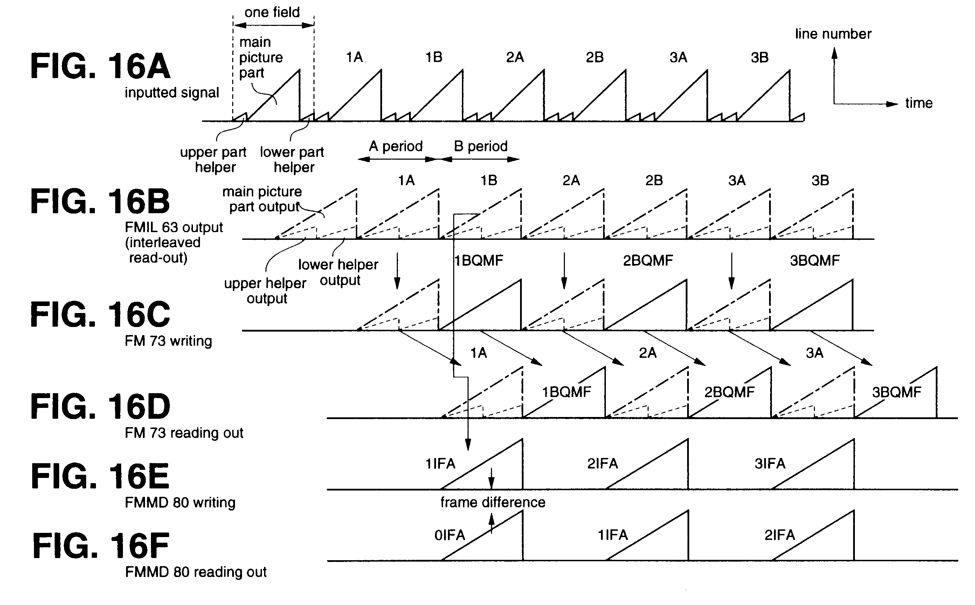

Next, a second embodiment of the present invention applied to a scanning line interpolation circuit of a PAL plus television receiver is described with reference to FIG. 15 and FIGs. 16A to 16F. In the first embodiment, scanning line interpolation processing was carried out after carrying out color plus processing. However, in this second embodiment, color plus processing and vertical filtering are carried out after interleave-processing of the helper signal. The input part 61 takes a PAL plus composite image signal (CVBS) and a helper signal (H) as input, superimposes the helper signal with the black band areas of the PAL plus composite image signal (CVBS) and outputs this signal as the new luminance signal (CVBS + H) after converting to a digital signal. Further, the color signal (UV) is inputted and then outputted after being converted to a digital signal.

A 1/2 field delay circuit 62 delays the signal (CVBS + H) provided by the input part 61 and the signal (UV) by a period for scanning half a field and then outputs. The random access field memory (FMIL) 63 stores the signal from the 1/2 field delay circuit 62. The FMIL 63 sequentially reads out the signals stored therein at a rate of one line of information in the black band area to three lines of the main picture part information and thus so-called interleaved image is outputted.

Band-dividing filters 64 and 65 divide the inputted signal into a low frequency region (low frequency band luminance signal) not including the color carrier signal and a high frequency region (high frequency band luminance signal) including the color carrier signal. An adder 66 adds the high frequency band luminance signal from the band-dividing filter 64 and the high frequency band luminance signal from the band-dividing filter 65 and outputs the result of addition as the average high frequency band luminance signal within a frame. A coefficient unit 67 then regulates the amplitude of the average high frequency band luminance signal within a frame inputted from the adder 66 so as to correspond to an amount of motion of luminance signal detected by a motion detector 79 to be described later.

An anti-aliasing filter 68 then reduces irregularities in the continuity of inclined lines using inter-field addition. An adder 69 adds the B-field low frequency band luminance signal from the band-dividing filter 64 and the high frequency band luminance signal from the anti-aliasing filter 68 and outputs the result of the addition. An adder 83 then adds the A-field low frequency band luminance signal from the band dividing filter 65 and the high frequency band luminance signal from the anti-aliasing filter 68 and outputs the result of the addition.

A vertical filtering processor (VF) 70 performs scanning line interpolation processing on the B-field luminance signal from the adder 69 and the A-field luminance signal from the adder 83 and outputs signals BQMF and AQMF as the results of interpolation. The change over switch 71 switches over the output signal from FMIL 63 and the output signal (BQMF) from VF 70 between them and outputs the switched over signals. A changeover switch 72 switches over the output signal from a one field delay field memory (FM) 73 to be described later and an output signal (AQMF) from the VF 70 between them and outputs the switched over signals.

The one field delay field memory 73 stores the output signal from the changeover switch 71 and a color signal (UV) outputted from the changeover switch 77 and outputs these signals after providing a delay by a period for scanning one field. An adder (CADD) 74 adds the signal from FMIL 63 and the signal from FM 73 and then outputs the result of addition. A color difference output switch (CSW) 75 switches over an A-field color difference signal inputted from FM 73, a B-field color difference signal from FMIL 63 and an average color difference signal (IFA) within one frame from the adder 74 between them on the basis of a color difference switching signal from the motion detector 79 to be described later in such a manner as to correspond to the amount of movement of the image and outputs the switched over signals.

A vertical filtering processor (VFC) 76 performs scanning line interpolation processing on the inputted color difference signal and outputs a signal (BQMF_C) and a signal (AQMF_C) as interpolation results. A changeover switch 77 switches over an output signal from VFC 76 and an output signal from FMIL 63 between them and provides the switched over signals to the FM 73. The changeover switch 78 switches over the output signal (AQMF_C) from VFC 76 and the output signal from FM 73 between them, with these switched over signals then being outputted by the output part 82.

A motion detection memory (FMMD) 80 stores the average color difference signal (IFA) within one frame outputted from the adder 74, delays this signal by a period for scanning one frame to give a signal (IFA(-1)) and provides this signal to the motion detector 79. The motion detector 79 then detects the amount of motion of the image on the basis of the average color difference signal (IFA) within one frame provided from the adder 74 and the one frame previous average color difference signal (IFA(-1)) within one frame provided from the motion detection memory 80 and supplies a signal corresponding to the amount of detected motion to the coefficient unit 67 and the color difference output switch 76.

Next, a description is given of the operation occurring in film mode. The PAL plus composite image signal (CVBS), helper signal (H) and the color difference signal (UV) are inputted at the input part 61. At the input part 61, the helper signal (H) is superimposed with the black band areas of the composite PAL plus image signal (CVBS). This is taken as the new luminance signal and A/D converted. The color signal (UV) is also A/D converted and outputted.

These digital signals are inputted to a 1/2 field delay circuit 62. Delay processing is then carried out at this portion with adjustment being carried out in such a manner that the total delay of the signal due to processing at various parts shown in FIG. 15 becomes an integer multiple of a period for scanning one field so that image quality deterioration caused by irregularity in the synchronization signal due to the VTR signals etc. can be avoided as described before. The luminance signal and color difference signal that pass through the 1/2 field delay circuit 62 are inputted to a random access field memory (FMIL) 63. At the random access field memory 63, the signal for the black band area is read out at a rate of one line to three lines of the main picture part signal and a so-called interleaved picture is outputted. The description in the following will be divided into a description for the luminance signal and a description for a color difference signal.

The luminance signal passing through the FMIL 63 is inputted to the band-dividing filter (Y_BSPLT_B) 64 and a changeover switch (YSW1) 71. In the period where the A-field signal is being outputted from FMIL 63 (hereafter referred to as the "A period"), the changeover switch 71 is switched over to the side of terminal A and the A-field signal outputted from FMIL 63 is inputted to the one field delay field memory (FM) 73 via a changeover switch 71. The image for the A-field previously interleave-processed at the FMIL 63 is then outputted from the one field delay field memory (FM) 73 in the period where the B-field signal is being outputted from FMIL 63 (hereafter referred to as the "B period") .

In the B period, the interleaved image signal for the B-field from FMIL 63 and the interleaved image signal for the A-field of the same frame read out from FM 73 with a delay by a period for scanning one field respectively arrive at the band-dividing filter 64 and the band-dividing filter 65 at the same time. These interleaved image signals become input signals satisfying the conditions suited to film mode processing and color plus processing. The high frequency band luminance signals for the A-field and the B-field of the same frame outputted from the band dividing filters 65 and 64 are then added by the adder (YADD) 66 to give an average high frequency band luminance signal within a frame with the color carrier signal removed. This signal is then multiplied by a prescribed coefficient at a coefficient unit 67 on the basis of results of image motion detected by the motion detector 79. This signal then passes through the anti-aliasing filter (Y_VAA), added with the B-field low frequency band luminance component at the adder 69 and added with the A-field low frequency band luminance component at the adder 83, before becoming the luminance signal outputs for each of the fields A and B. Each luminance signal is then inputted to a vertical filtering processor (VF) 70 and a signal AQMF and a signal BQMF are calculated at the same time as the interpolation results and outputted.

In the aforementioned B period, the signal AQMF outputted from VF 70 is outputted to the output part 81 because the changeover switch 72 is switched over to the B side. At the same time, the signal (BQMF) outputted from the same VF 70 is inputted to the one field delay field memory (FM) 73 via the changeover switch 71 switched over to the same B side. This signal BQMF is then delayed at FM 73 by a period for scanning one field outputted from FM 73 at the next A period and outputted to the output part 81 via the changeover switch 72 which is switched over to the A side. As a result of the above, the signal AQMF and the signal BQMF are alternately outputted, whereby resultant signals which have undergone color plus processing and scanning line interpolation processing are outputted from the output part 81.

Next, a description is given with respect to the color signal. In the A period, the interleave-processed (however, a helper signal is not used for the color signal and one line of dummy data is inserted for three lines of main picture part) A-field color difference signal that has passed through FMIL 63 is stored in FM 73 via the changeover switch (CSW1) 77 switched over to the A side. Then, in the same way as in the case for the luminance signal, the color difference signal for the A-field read out from FM 73 and the color difference signal for the B-field read out from FMIL 63 are inputted to the adder 74 at the same time. The average color difference signal (IFA) within a frame is calculated by performing addition at the adder 74 in the same way as for the aforementioned color plus processing. This average color difference signal (IFA) within one frame is written into the motion detection memory (FMMD) 80. The one frame-delayed read-out results (IFA(-1)) and the color signal (IFA) in the following B period are compared at the motion detector (MD) 79 and the amount of motion is calculated.

This result is quantized to, for example, one bit and supplied to a color difference output switch 75 as a color difference switching signal. When there is dramatic motion in the image, the color difference output switch 75 is switched over to be connected in such a manner as to select the average color difference signal within one frame (IFA). This is then inputted to the vertical filtering processor (VFC) 76 and vertical filter outputs AQMF_C and BQMF_C are calculated for each field. The changeover switch (CSW1) 77 and the changeover switch (CSW2) 78 for color difference signal use are switched over in the same way as in the case of the luminance signal to the A side in the A period and to the B side in the B period. The signal AQMF_C and the signal BQMF_C as the interpolation results are then outputted alternately from the output part 82.

Next, the memory control method for detecting motion in the film mode is described with reference to FIG. 16A to FIG. 16F. FIG. 16A is the input signal for FMIL 63 and comprises an upper part helper, lower part helper and main picture part. FIG. 16B is an interleave-processed signal read out from FMIL 63 and therefore is represented by the same form as those in the case shown in FIG. 6A and FIG. 6B. FIG. 16C shows the input to the one field delay field memory (FM) 73. As described above, in the A period, the output of FMIL 63 is directly written into the FM 73 via the changeover switch 71 which is switched to the A side. In the B period, BQMF is selected by the changeover switch switched to the B side and written into the FM 73.

FIG. 16D shows the signal read out from FM 73, with this signal being the signal of FIG. 16C delayed by a period for scanning exactly one field. The average color difference signal (IFA) within one frame is obtained by adding the signal shown in FIG. 16B and the signal within the same frame shown in FIG. 16D in the B period. This is then written into the motion detection memory (FMMD) 80 as shown in FIG. 16E. The signal read out from the FMMD 80 is then delayed by a period for scanning one frame and becomes as shown in FIG. 16F. The inter-frame difference of IFA, which is an essential element of image motion detection, can then be obtained in the B period for carrying out color plus processing by getting the difference between the signal shown in FIG. 16E and the signal shown in FIG. 16F.

Next, the operation in camera mode is described. First, a description is given of the process for the luminance signal. A switching operation in camera mode is carried out for the changeover switches 71 and 72 in the same way as in film mode. Namely, the changeover switches 71 and 72 select the side A in the A period where the A-field signal is outputted from the random access field memory 63. The changeover switches 71 and 72 then both select the side B in the B period where the B-field signal is outputted from the random access field memory 63. The A-field composite image signal (CVBS + H) inputted from the input part 61 is further inputted to the random access field memory 63 via the 1/2 field delay circuit 62. In the A period, the interleave-processed composite image signal read out from FMIL 63 is inputted to FM 73 via the changeover switch 71 selecting the side A. In the B period, the A-field composite image signal delayed at FM 73 is inputted to the band dividing filter 65. At the same time as this, the B-field composite image signal interleaved at FMIL 63 is provided to the band dividing filter 64. The A-field and B-field high frequency band luminance signals respectively outputted from the band dividing filters 64 and 65 are added at the adder 66 and outputted to the coefficient unit 67 as the average high frequency band luminance signal within a frame. The average high frequency band luminance signal within a frame is multiplied at the coefficient unit 67 with the coefficient provided from the motion detector 79 and provided to the adders 69 and 83 via the anti-aliasing filter 68. The B-field low frequency band luminance signal outputted from the band dividing filter 64 and the average high frequency band luminance signal within a frame are added at the adder 69 and provided to the vertical filtering processor 70 as the B-field luminance signal. Further, the low frequency band luminance signal for the A-field outputted from the band dividing filter 65 and the average high frequency band luminance signal within one frame are added at the adder 83 and provided to the vertical filtering processor 70 as the A-field luminance signal. At the vertical filtering processor 70 calculation processings are performed in such a manner as to smooth continuities in inclined lines using inter-field addition, but these calculations are performed using different coefficients to those at the time of film mode. In the case of the aforementioned film mode, the luminance signals for the A-field and B-field (interleaved) of the same frame were combined and vertical filtering calculations thereof were carried out. However, in the case of camera mode, although the luminance signals for the A-field and B-field (interleaved) are inputted at the same time, calculations have to be carried out for every field and the A-field luminance signal and the B-field luminance signal are therefore separately calculated at the same time. The vertical filtering-processed A-field luminance signal is then outputted to the output part 81 via the changeover switch 72 selecting the side B. On the other hand, the B-field luminance signal for which vertical filtering process calculations are carried out separately from the A-field is inputted to FM 73 via the changeover switch 71 selecting the side B. In the following A period, the vertical filtering-processed B-field luminance signal read out from FM 73 is outputted to the output part 81 via the changeover switch 72 selecting the side A. Interleaved, color plus processed and vertical filtering-processed A-field and B-field luminance signals are then alternately outputted from the output part 81 by repeating this series of processes.

Next, the color difference signal is described. The switching operation for the changeover switches 77 and 78 is the same as for in film mode. Namely, in the A period the A side is selected and in the B period the B side is selected. In the A period, the A-field color difference signal (dummy data is inserted in the same way as in film mode) read out from FMIL 63 is provided to FM 73 via the changeover switch 77 selecting the side A. In the B period, the color difference signal for the A-field outputted from FM 73 is provided to the adder 74 and the color difference changeover switch 75. At the same time as this, the color difference signal for the B-field (with dummy data inserted) is read out from FMIL 63 and provided to the adder 74 and the color difference switch 75. At the adder 74, the result of adding the delayed A-field color difference signal and the B-field color difference signal is outputted as the average color signal (IFA) within a frame. The average color signal within a frame is then provided to the color difference output switch 75, the motion detector 79 and the motion detection memory 80. The motion detector 79 detects motion of image by obtaining the difference between the average color signal within one frame for one frame previous read out from the motion detection memory and the average color signal within one frame for the original frame. A coefficient for the coefficient unit 67 is then generated in response to the detected motion and a control signal for the color difference output switch 75 is outputted. In the color difference output switch 75, the average color signal within a frame is selected, when motion of image is small, while the A-field color difference signal or the B-field color difference signal is selected when the image shows a large amount of motion. The color difference signal selected at the color difference output switch 75 in response to the amount of motion is provided to the vertical filtering processor 76. At the vertical filtering processor 76 calculation processings are performed in such a manner as to smooth continuities in inclined lines using inter-field addition, but these calculations are carried out using different coefficients to those used during film mode. In the case of the aforementioned film mode, the color difference signals for the A-field and B-field of the same frame are combined and vertical filtering calculations thereof are carried out. However, in the case of camera mode, although the color difference signals for the A-field and B-field are inputted at the same time, calculations have to be carried out for every field and the A-field color difference and B-field color difference signals are therefore separately calculated at the same time. The vertical filtering-processed A-field color difference signal is then outputted to the output part 82 via the changeover switch 78 selecting the side B. On the other hand, vertical filtering-processed B-field color difference signal is provided to FM 73 via the changeover switch 77 selecting the side B. In the following A period, the B-field color difference signal outputted from FM 73 is outputted to the output part 82 via the changeover switch 78 selecting the side A. Color plus processed and vertical filtering-processed A-field and B-field color difference signals are then alternately outputted from the output part 82 by repeating this series of processes.

### Third Embodiment

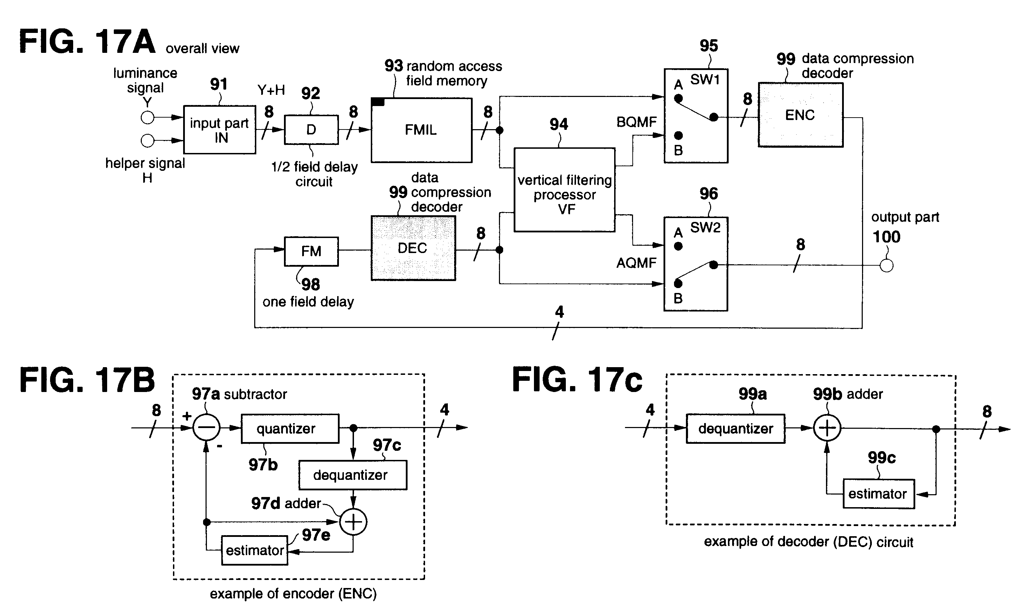

A further embodiment of the image signal processing device of the present invention will now be described with reference to FIG. 17A to FIG. 17C. In the scanning line interpolation circuit shown in FIG. 17A to FIG. 17C, a bit number reducing circuit is provided at the input and output parts of the one field delay field memory 57 at the scanning line interpolation circuit shown in FIG. 13 so that the amount of memory for the one field delay field memory 57 is reduced accordingly.

In FIG. 17A, an example is shown where a data compression encoder 97 for reducing the 8-bit luminance signal to four bits is provided before A-field memory 98 corresponding to the one-field delay field memory 57 shown in FIG. 13 and the amount of memory used is reduced by half. The memory capacity of the field memory 98 is therefore half of the field memory 57 shown in FIG. 13. FIG. 17B shows an example of configuration for the data compression encoder 97 (compression means) for reducing the bit number in this way. Further, FIG. 17C shows an example of configuration for a data compression decoder 99 (expansion means) provided to decode the signal from the field memory 98 to the form of the original signal.

The eight-bit luminance signal outputted from the changeover switch 95 is converted to a four bit luminance signal at the data compression encoder 97 and provided to the field memory 98. The field memory 98 stores the luminance signal from the data compression encode 97 and then provides the signal to the data compression decoder 99 after a delay for scanning one field. The data compression decoder 99 then decodes the signal from the field memory 98 to the form of the original signal and outputs this signal to a vertical filtering processor 94. The process thereafter is the same as the process for the case described with reference to FIG. 13 and a description of this process will therefore be omitted.

At the data compression encoder 97, the inputted luminance signal and an output signal from an estimator 97e are compared at a subtractor 97a and the difference of these signals is then converted to a four-bit luminances signal at a quantizer 97b before being outputted. This four-bit luminance signal is provided to FM 98 and a dequantizer 97c. The four-bit luminance signal provided to the dequantizer 97c is provided to an adder 97d after being returned to the form of the original signal, added with the output signal from the estimator 97e and provided to the subtractor 97a.

At the data compression decoder 99, the four-bit luminance signal provided from FM 98 is returned to the form of the original signal at the dequantizer 99a. The signal is then added with the output signal from the estimator 99c to be returned to the form of the original luminance signal before being outputted. The outputted signal is then inputted to the vertical filtering processor 94 and the changeover switch 96.

In this way, the necessary memory capacity can be reduced by compressing the luminance signal to reduce the number of bits.

In the above embodiment, bit number reduction has been carried out for the luminance signal, but the same process may also be carried out for the color signal. Further, as shown in FIG. 17B and FIG. 17C, a DPCM method has been shown as an embodiment of bit reduction, but it is obvious that the bit reduction can also be achieved with other methods.

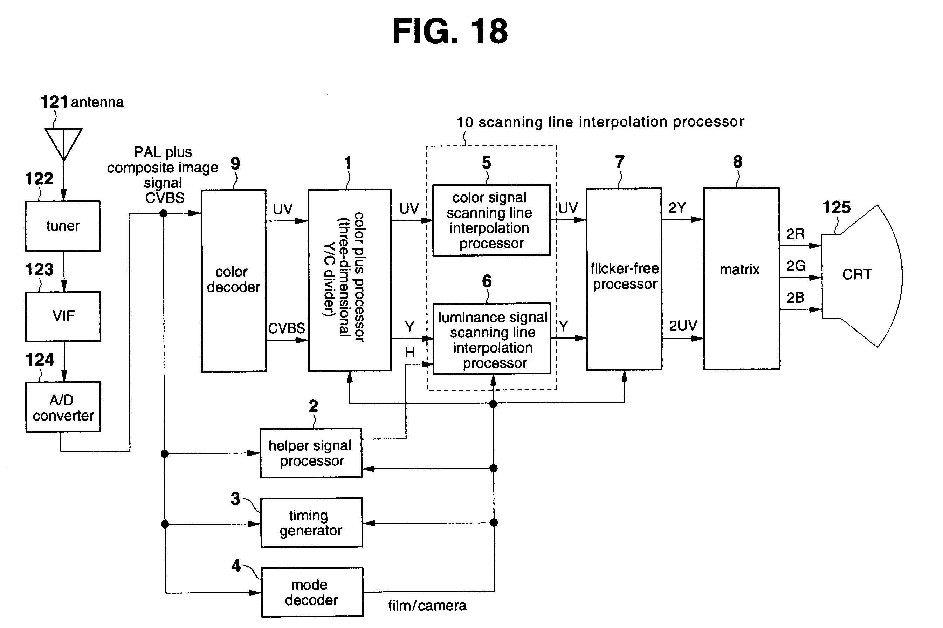

FIG. 18 is a block diagram showing a configuration of an embodiment of the PAL plus television receiver to which the present invention is applied. A signal corresponding to the broadcast waves received by the antenna 121 is provided to the tuner 122. The tuner 122 selects a signal corresponding to a prescribed channel from the signal provided by the antenna 121 and provides this signal to VIF 123. The VIF 123 converts the signal corresponding to a prescribed channel inputted from the tuner 122 to an intermediate frequency signal and provides this signal to the A/D converter 124. The A/D converter 124 then converts the signal provided from the VIF 123 to a digital signal before providing the resulting signal to the color decoder 9, the helper signal processor 2, the timing generator 3 and the mode decoder 4.

The color decoder 9 extracts the frequency band including the color carrier wave from the PAL plus composite image signal using a simple band pass filter and carries out color decoding. The helper signal processor 2 then extracts the helper signal from the inputted PAL plus composite image signal and provides this helper signal to the luminance signal scanning line interpolation processor 6. The color plus processor 1 then extracts the luminance signal (Y) from the PAL plus composite image signal inputted from the color decoder 9 and provides the Y signal to the luminance signal scanning line interpolation processor 6 and the UV signal to the color signal scanning line interpolation processor 5 after removing the cross-color component from the color signal (UV) inputted by the color decoder 9.

The mode decoder 4 decodes the identification control signal from the inputted PAL plus composite image signal, carries out mode determination, and outputs a signal corresponding to the determination results etc., with this information also being supplied to the timing generator 3. The timing generator 3 also generates various control signals on the basis of information provided by the mode decoder 4 and provides these signals to various parts.

The scanning line interpolation processor 10 has a configuration as shown in FIG. 13, FIG. 15, or FIG. 17A to FIG. 17C. The configuration and operation are basically the same as the cases described above with reference to FIG. 13, FIG. 15, or FIG. 17A to FIG. 17C and a detailed description thereof is therefore omitted. Vertical filtering processing is performed on the inputted luminance signal and color signal, with these processed signals then being provided to a matrix 8 via the flicker-free processor 7. The matrix 8 then converts the inputted luminance signal and color signal to an RGB signal and provides these signals to the CRT 125. As a result, an image corresponding to the RGB signal provided by the matrix 8 is displayed at the CRT 125. Further, the above described circuit shown in the block diagrams in FIG. 13, 15 and 17A to 17C can be realized by a digital signal processor with an externally provided memory. A device of smaller size can then be achieved by using a digital signal processor.

As described above, according to the present invention, the amount of memory necessary for the scanning line interpolation processor can be reduced. Further, by integrating separately performed helper signal processing and color plus processing together under prescribed memory control, rational management of the memory becomes possible and the system can be operated more efficiently together with a reduction in the number of field memories used. Further reduction of the amount of field memory becomes possible by using data compression technology such as DPCM etc. and reducing the amount of data inputted to the field memory for providing one-field delay.

In the above embodiments, the bit number is reduced using a DPCM method but the bit number can also be reduced using other methods.

Further, the present invention can also be applied to, for example, tape recorders and other electronic equipment.

The specific numeric values used in each of the above embodiments are only examples, and the present invention is by no means limited in this respect.

## Claims

1. A television broadcast receiving device for receiving a broadcast signal including a main picture part image signal transmitted in letterbox format and a resolution-enhancing signal for enhancing vertical resolution of the main picture part image signal transmitted using a scanning line composing a black band area, said television broadcast receiving device comprising:
interleaving means for processing said main picture part image signal and said resolution enhancing signal and outputting an interleaved signal in a prescribed order;
vertical filtering processor means for smoothing continuity of the signal in the vertical direction lost at the interleaving means; and
delay means for alternately delaying a first field signal outputted from said interleaving means and a second field signal outputted from said vertical filtering processor means by a prescribed period.

2. A television broadcast receiving device according to claim 1, wherein said interleaving means outputs one scanning line of enhancement signal for the black band area following a plurality of scanning lines of image signal for said main picture part.

3. A television broadcast receiving device according to claim 1, further comprising signal switching means for providing said first field signal outputted from said interleaving means to said delay means and outputting said second field signal delayed by said delay means to an output part in a first period, and providing said first field signal outputted from said delay means and said second signal outputted from said interleaving means to said vertical filtering processor means and providing said second field signal outputted from said vertical filtering processor means to said delay means in a second period.

4. A television broadcast receiving device according to claim 2, wherein said interleaving means comprises a memory capable of random access.

5. A television broadcast receiving device according to claim 4, wherein said delay means delays an inputted signal by one field period.

6. A television broadcast receiving device according to claim 5, wherein said interleaving means takes a composite image signal, said resolution enhancing signal and a color difference signal as input, outputs one scanning line of resolution-enhancing signal following a plurality of scanning lines of said composite image signal, and outputs one scanning line of dummy data following a plurality of scanning lines of said color difference signal.

7. A television broadcast receiving device according to claim 6, further comprising color plus processing means for carrying out color plus processing using the output of said interleaving means and the output of said delay means,
said color plus processor means providing the output thereof to said vertical filtering processor means.

8. A television broadcast receiving device according to claim 7, said vertical filtering processor means comprising:
a first vertical filtering processor taking a luminance signal outputted from said color plus processing means as input; and
a second vertical filtering processor taking a color difference signal outputted from said color plus processing means as input.

9. A television broadcast receiving device according to claim 8, further comprising:
data compression encoding means provided at the input side of said delay means; and
data compression decoding means provided at the output side of said delay means.

10. A television broadcast receiving device according to claim 7, wherein
at least said color plus processing means and said vertical filtering processor means are comprised of digital signal processors.
